(19) **Europäisches Patentamt**
**European Patent Office**
**Office européen des brevets**

(11) **EP 3 282 598 A1**

(12) **EUROPEAN PATENT APPLICATION**

(43) Date of publication:
**14.02.2018 Bulletin 2018/07**

(51) Int Cl.:
***H04B 7/185*** (2006.01)     ***H04W 72/04*** (2009.01)

(21) Application number: **16184034.3**

(22) Date of filing: **12.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fraunhofer-Gesellschaft zur Förderung der angewandten Forschung e.V. 80686 München (DE)**

(72) Inventors:
 • **MAYER, Frank**
  **91083 Baiersdorf (DE)**
 • **WANSCH, Rainer**
  **91083 Baiersdorf (DE)**

(74) Representative: **Hersina, Günter et al Schoppe, Zimmermann, Stöckeler Zinkler, Schenk & Partner mbB Patentanwälte Radlkoferstrasse 2 81373 München (DE)**

(54) **COMMUNICATION SYSTEM AND TRANSMITTER**

(57)     A communication system for performing a communication within a designated system bandwidth comprises at least a first transmitter and a receiver. The system bandwidth is divided into a plurality of frequency slots, each having a slot bandwidth, wherein each of the plurality of frequency slots is divided into a plurality of sub-slots, each having a sub-slot bandwidth and a sub-carrier. The transmitter is configured to split the signal into a plurality of signal portions and to select for transmitting first of the plurality of signal portions a first sub-slot of a first frequency slot and to select for transmitting a second signal portion a first sub-slot of a second frequency slot.

Figure 1

EP 3 282 598 A1

## Description

Embodiments of the present invention refer to a communication system for performing communication within a designated system bandwidth and to a method for performing the communication. An additional embodiment refers to a transmitter of the communication system and to a receiver. Preferred embodiments refer to a satellite communication system and a satellite transmitter.

Satellite Communication may be used, among other applications, in Machine to Machine (M2M) or "Internet of Things" (IoT) type applications, connecting fixed or mobile "terminals" via a satellite communication link to the internet or other infrastructure (e.g. servers, databases, "the cloud"). Communication may be uni-directional - typically from the terminals to the satellite, e.g. for reporting location or state information or sensor readings - or bi-directional, transmitting messages or data from and to the terminals.

M2M or *IoT" type terminals may be deployed in larger quantities and thus are cost and resource constraint. Resource constraints include total energy budget (e.g. for battery powered devices), available or permitted peak transmit power, antenna gain and pointing performance and overall size of the terminal and antenna. The amount of data transmitted by a single terminal may be very small and transmissions may occur infrequently while the amount of spectrum designated to the system may be comparable large (few to several MHz of bandwidth). This allows operating the communication link at low spectral efficiency and/or assigning only a small fraction of the designated satellite link bandwidth and capacity to an individual terminal.

In many cases, transmissions from the terminals need to comply with a spectral power density (PSD) mask, limiting the amount of power transmitted into the direction of other satellites or other systems. Depending on region, only a narrow angular range of $\pm 1.5°$ or $\pm 2.0°$ along the geostationary arc ("in-plane" direction) remains unconstraint, while emissions into all other directions are more or less constraint in power (density) over any $BW_{ref}$ = 4kHz (FCC 25.218, 25.222, 25.227) or $BW_{ref}$ = 40kHz (ITU-R S.728-1) frequency slot.

For a typical antenna, the beam width is indirectly proportional to the antenna size. E.g. the beam width of a parabolic dish reflector type antenna may be approximated by $bdia \approx 70\lambda/d_{refl}$, where $d_{refl}$ is the reflector size (in meter) and $\lambda$ the wavelength of the signal (in meter). $bdia$ is the resulting beam width (diameter measured with respect to the -3dB contour) in degree, and e.g. calculates as $bdia$ = 7.5° for a 20 cm antenna ($d_{refl}$ = 0.2 m) used for transmission in Ku-Band at 14 GHz ($\lambda$ = 0.0214m). From this value it becomes apparent that energy emitted by such a small antenna is not only transmitted towards the wanted satellite; a significant fraction of the energy is transmitted towards other satellites and thus subject to limiting by the mask.

Moreover, installation of a fixed terminal antenna may result in a systematic offset, biasing the beam to the "left" or "right", and potentially transmitting even more energy towards other satellites. Similar for mobile terminals, errors inherent in the antenna tracking and pointing means may result in potential emissions towards other satellites. Therefore, when determining mask compliance, systematic and random pointing errors need to be taken into account, widening the nominal beam width and typically further constraining the transmitted power.

A straight forward approach for determining spectral mask compliance and sizing the terminal power accordingly uses the antenna beam shape as function of pointing angle, normalized to 0 dB maximum gain, then applies a worst case "max-hold" de-pointing of this shape and finally compares the result to the spectral mask, looking for the minimum margin between de-pointed shape and the mask. This minimum margin - which might be negative - will define the maximum allowable power of the terminal within any $BW_{ref}$ frequency slot. Assuming equal power distribution for the carrier signal transmitted by the terminal, multiplication by the number of $BW_{ref}$ frequency slots occupied by the carrier signal yields the maximum allowable power for such a carrier.

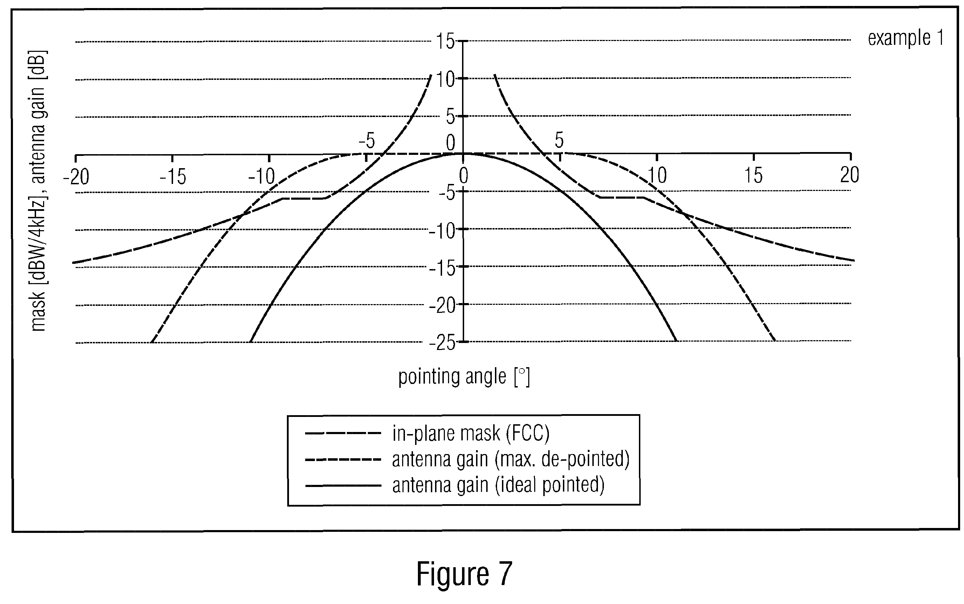

As Example 1, this approach is illustrated in Figure 7, using the in-plane mask as defined by FCC 25.218 for a "conventional Ku-band digital earth station (N=1)". The ideal (zero de-pointing) antenna gain is approximated by $G_0(d)$ = -12. $(d/bdia)^2$ with $bdia$ = 7.5°. A maximum de-pointing of $pe$ = 5.0° is assumed, resulting in an antenna gain envelope approximated by

$$G_{pe}(d) = \begin{cases} G_0(d + pe) & d < -pe \\ 0 & -pe \le d \le +pe \\ G_0(d - pe) & d > +pe \end{cases}$$

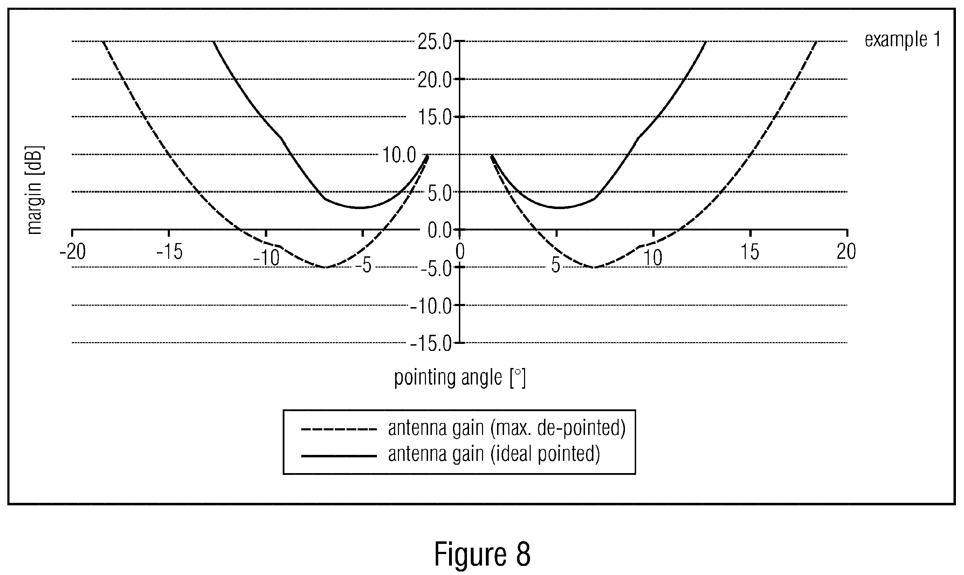

The resulting margin is illustrated in Figure 8, with a minimum of 2.9 dB at $\pm 5°$ for the ideal (zero de-pointing) antenna gain and -5.3 dB at $\pm 7°$ for the antenna gain envelope over maximum de-pointing range. Assuming worst case de-pointing, maximum permitted power in this example is therefore -5.3 dBW/4kHz or 0.7 dBW for a 16 kHz signal carrier and $BW_{ref}$ = 4kHz.

Within the prior art, there are some approaches aiming with regard to the above discussed problem. Exemplarily, methods for managing PSD mask compliance and/or for maximizing mask-compliant PSD usages are known from prior art:

The US 2002058477A discloses a system that "employs a ground-based network operations center ("NOC") having a central control system for managing access to the satellite-based transponder so that the aggregate power spectral density (PSD) of the RF signals of all the mobile systems does not exceed, at any time, limits established by regulatory agencies to prevent interference between satellite systems." This method uses "a reverse calculation method to determine mobile terminal EIRP and then using antenna models to project the EIRP on to the GEO arc. Accurate knowledge of the mobile terminal location and attitude is acquired through periodic reports sent from the mobile terminal to the NOC".

The US 8885693B discloses a system using "An automated process to periodically check and ensure that earth terminal settings provide compliant EIRPSD" and where the "current input power spectral density being transferred to the antenna is computed by the apparatus and compared to the preprogrammed regulatory limit for the specific antenna".

The US 2010124922A discloses "A network for obfuscating satellite terminal transmission activity", and "calculate(s) how much unused transmission power spectral density is available to the network for obfuscation by subtracting from a total network regulatory transmission power spectral density limit the aggregate transmission power spectral density."

Moreover, some known methods intended for managing adjacent satellite interference (ASI) are also beneficial for solving the problem of PSD mask compliance, e.g. by commanding the interfering terminal to reduce the transmit power or by readjusting the antenna pointing.

The US 2002146982A discloses "A method for rapidly monitoring and detecting a mobile terminal causing RF interference with one or more satellites orbiting in the vicinity of a target satellite, from a plurality of mobile terminals accessing the target satellite." This includes a method for identification of a "mobile platform as causing the unintended RF interference with the adjacent satellite(s)."

The US 2002146995A discloses "A system and method for quickly detecting and remedying an interference incident caused by one of a plurality of mobile terminals in communication with a transponded satellite." This includes a method for identification which of the "mobile terminals has caused an interfering event by determining which mobile terminal accessed the communication system just prior to the interference event arising."

The US 2002151278A discloses "A method and apparatus for identifying which one of a plurality of mobile terminals in communication with a ground-based base station, via a transponded satellite, is causing interference with a non-target satellite orbiting in a vicinity of the transponded satellite." This includes a method to identify the mobile terminal causing the interference condition and to "command the mobile terminal to reduce it transmit power accordingly".

The US 2011269396A discloses "A method for remotely and dynamically controlling adjacent satellite interference comprising monitoring one or more off-axis signals emitted by one or more remote transmitters; determining whether one or more of the off-axis signals is creating adjacent satellite interference (ASI), off axis emissions and inband interference that is higher than a predetermined level of acceptable interference, and transmitting a control signal to at least one of the one or more remote transmitters in response to the determination".

Methods to allow operation of non-compliant antenna are known from prior art. Such methods may also be applied to managing PSD mask non-compliance.

The US 7962134B discloses "A system and method allow end users the ability to operate using non-compliant antennas. A coordination database may be continually updated with respect to geographic coordinates, time planning, frequency and orbital positions."

The US 2009052373A discloses "Methods to improve the efficiency of satellite transmission by coordinating the use of corresponding channels on adjacent satellites."

For a given antenna, PSD mask compliance limits the maximum transmitted power of the terminal. Thus system efficiency may be improved by employing methods that result in less aggregate power required for transmitting the same amount of data:

> Using a specific spreading technique, US 2004037238A discloses that "Orthogonal CDMA (OCDMA) in the return link of a satellite based communications system provides improved bandwidth efficiencies; increased ability to overcome channel degrading phenomenon; reduced transmission power; or various combinations thereof" and that this results in the "same, or lower, aggregate power as would be used by a single terminal using TDMA."

The US 6052364A states "A satellite communication system including a portable satellite terminal is provided which utilizes C/Ku-band and spread spectrum technology to drastically reduce the antenna and terminal sizes."

The US 2012156986A discloses "A method of reducing adjacent satellite interference, the method comprising monitoring, by a processor, a power spectral density (PSD) of a signal transmitted by a remote transmitter". Among other alternatives, this includes adjusting the "spread spectrum spreading factor" for "reducing the PSD of the signal transmitted".

Detection of de-pointed stationary antennas or improvements in the pointing accuracy of a mobile antenna yield less individual and/or average pointing error; this may result in increased minimum margin between de-pointed shape and mask.

The US 2002050953A discloses "a system and method for monitoring a non-tracking satellite antenna terminal's pointing accuracy in three situations."

The US 5398035A discloses an example for tracking a satellite and steering the antenna pointing angle, where "An antenna attitude controller maintains an antenna azimuth direction relative to the satellite by rotating it in azimuth in response to sensed yaw motions of the movable ground vehicle so as to compensate for the yaw motions to within a pointing error angle. The controller sinusoidally dithers the antenna through a small azimuth dither angle greater than the pointing error angle while sensing a signal from the satellite received at the reflector dish, and deduces the pointing angle error from dither-induced fluctuations in the received signal."

The US 2011304496A discloses "The combination of a dual offset Gregorian antenna (DOGA) with a stabilized polarization over elevation over tilt over azimuth pedestal, and a control/stabilization algorithm, ensures antenna orientation restrictions guarantee compliance with side-lobe intensity regulations".

Since all of the above discussed state of art approaches suffer under some drawbacks, there is the need for an improved approach.

Objective of the present invention is to provide a concept enabling for at least one, preferably for multiple transmitters a stable communication having an increased signal to noise ratio and interference ratio and an increased spectral efficiency and data throughput.

This objective is solved by the subject matter of the dependent claims.

Embodiments of the present invention provide a communication system for performing a communication within a designated system bandwidth. The system comprises at least a transmitter for transmitting a signal using frequencies within a system bandwidth and a receiver for receiving the signal. Here, the system bandwidth is divided into a plurality of frequency slots, wherein each frequency slot has an own bandwidth, e.g. the same bandwidth for each frequency slot. Each of the plurality of frequency slots is divided into a plurality of sub-slots, each having a sub-slot bandwidth and a sub-carrier. For example, the sub-slot bandwidth may be equal for each sub-slot within a frequency slot or over all frequency slots. The transmitter is configured to split the signal into a plurality of signal portions and to select for transmitting a first of the plurality of signal portions a first sub-slot of a first of the plurality of frequency slots and to select for transmitting a second of the plurality of signal portions a first sub-slot of a second of the plurality of frequency slots. Vice versa, this means that the first transmitter of the system may always use the first sub-slot of the plurality of frequency slots for transmitting the spited signal.

Teachings disclosed herein are based on the findings that it is more beneficial for a communication system (having a designated system bandwidth) to allow multiple transmitters (like terminals) to use the same frequency slot (portion of the designated system bandwidth) in a special manner instead of assigning the multiple frequency slots to the multiple transmitters. Here, special manner means that each frequency slot is sub-divided into sub-slots, wherein the respective first sub-slot within all frequency slots of the system bandwidth is typically assigned to a first transmitter. Analogously for the case multiple transmitters use the system a respective second sub-slot within each frequency slot is assigned to a second transmitter, etc. Thus, this approach partitions the designated bandwidth and each terminals carrier signal in a way that allows multiple terminals to transmit concurrently and independently within the frequency slots. The reason for this is that the known statistical properties ("law of large numbers") lead to a reduced (average) pointing error.

Assuming multiple terminals concurrently transmitting, known statistical properties ("law of large numbers") lead to a reduced variance (standard deviation) of the pointing error, improving the power margin to the PSD mask (regulatory constraint). This in turn allows increasing the individual and aggregate terminal signal power within each $BW_{ref}$ frequency slot, resulting in a proportionally increased signal to noise and interference ratio and thus increased spectral efficiency and throughput. Assuming multiple terminals concurrently transmitting, known statistical properties also make it unlikely that $N$ concurrent transmissions are affected the same or similar instantaneous pointing error. This allows introducing an additional correction factor $c(N,p)$, allowing a further increase in the individual and aggregate terminal signal power within each $BW_{ref}$ frequency slot, resulting in further increased signal to noise and interference ratio and thus in further increased spectral efficiency and throughput.

According to another embodiment, the sub-carriers within a frequency slot and/or within the system bandwidth are arranged equidistant (equidistantly spaced in frequency). Here, each slot bandwidth within the frequency slots or within the system bandwidth may have the same size. Thus, the distance between the sub-carriers transmitted by the same terminal may be fixed and known, and can be beneficially used when "collecting" the sub-carrier belonging to the same transmission in a receiver, e.g. using poly-phase filter or FFT-based algorithms. The known repetition of the sub-carriers transmitted by the same terminal in subsequent slots can be beneficially used in the receiver, when identifying the sub-carrier frequency offset or to determine, which sub-carriers are actually in use. The search may be limited to the sub-slots of a single frequency slot as the sub-carrier frequency offset is identical in all used slots. According to further embodiments, the number of slots and/or the bandwidth of each frequency slot is adapted dynamically, e.g. based on the number of transmitters or based on the designated system bandwidth, or based on the required bandwidth for each terminal.

As discussed above, the emitting behavior for each transmitter is limited with regard to the peak transmit power, the antenna gain and with regard to the pointing performance. According to further embodiments, the transmitter is configured to bias an antenna gain envelope and/or a transmit power in accordance with the limitations.

According to further embodiments, the communication system comprises a determiner configured to determine a correction factor for adapting a biasing of the antenna gain envelope of the respective transmitter. The correction factor may be a function of the number of transmitters within the system, or a function of the number of selective frequency slots. Additionally, the determiner may be configured to analyze the current transmitting requirements, e.g. the required bandwidth of all transmitters and to adapt the correction factor in accordance with the analysis result.

Another embodiment provides a transmitter of the system, which uses a plurality of sub-slots, each arranged with its own frequency slot for transmitting a signal to a receiver. Another embodiment provides a receiver configured to receive a plurality of signal portions from at least one transmitter and to aggregate the signal portions in order to get the signal transmitted by the transmitter.

Another embodiment provides a method for performing communication within a designated system bandwidth. Here, the method comprises the steps of transmitting a signal, splitting the signal into a plurality of signal portions and selecting for transmitting a first of the signal portions, a first sub-slot of a first frequency slot, and selecting for transmitting a second of the signal portions, a first sub-slot of a second frequency slot.

Embodiments of the present invention will subsequently be discussed referring to the enclosed Figures, wherein

Figure 1 shows an exemplary block diagram of a system for performing a communication according to an embodiment;

Figure 2 shows a schematic diagram illustrating the principle of dividing a designated bandwidth into frequency slots and sub-slots in accordance to an embodiment;

Figure 3 shows a schematic diagram of a bandwidth $BW_s$ and carrier signal partitioning;

Figure 4 shows a schematic diagram illustrating FCC mask and antenna gain examples;

Figure 5 shows a schematic diagram illustrating a margin for the embodiment of Figure 4;

Figure 6 shows a schematic diagram for a pointing error simulation;

Figure 7 shows a schematic diagram illustrating FCC mask and antenna gain according to a conventional approach; and

Figure 8 shows a schematic diagram illustrating a margin resulting from the example of Figure 7 according to a conventional approach.

Before discussing embodiments of the present invention in detail, it should be noted that identical reference numerals are provided to objects having identical or similar function, so the description thereof is interchangeable or mutually applicable.

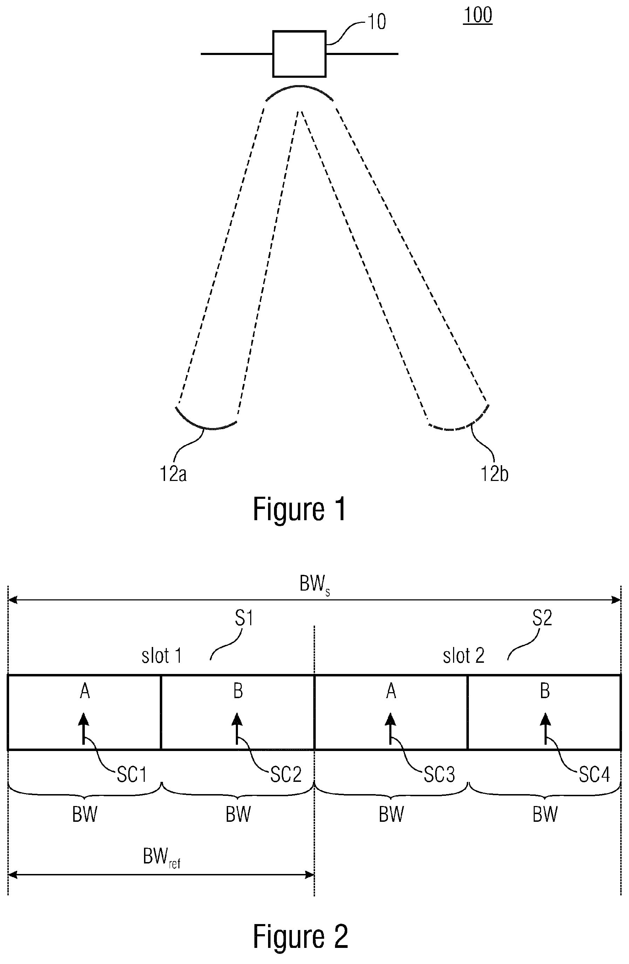

Figure 1 shows a system 100 for performing a communication. Here, the system 100 comprises one satellite 10 as receiver and a first terminal 12a as transmitter. Additionally, the system 100 comprises the optional second transmitter 12b. Both transmitters 12a and 12b transmit a respective signal to the receiver 10 using frequencies within the system bandwidth.

This system bandwidth $BW_s$ is illustrated by Figure 2. As can be seen, the entire designated system bandwidth $BW_s$ is divided into frequency slots, here two frequency slots S1 and S2. As discussed above, the typical approach is that the first transmitter 12a uses the slot 1 (reference number S1) and the second transmitter 12b uses the slot 2 (reference number S2). However, in this case, each slot is subdivided into sub-slots A and B such that multiple concurrent transmissions within the same slot are enabled. In detail, each sub-slot A and B of the first and second slot has an own sub-carrier as illustrated by the respective arrow marked with the reference numeral SC1 to SC4. Preferably, but not necessarily, the bandwidth BW of the sub-slots A and B within the two slots S1 and S2 have equal size. Consequently, the sub-carriers SC1 to SC4 are equidistantly spaced apart from each other.

In the embodiment of Figure 1, the transmitter 12a, e.g. an unidirectional transmitter, transmits its (first) signal to the receiver 10, e.g. a data signal to the satellite 10. Here, the transmitter 12a uses the sub-slots A, i.e. the sub-slot A of the slot S1 and the sub-slot A of the slot S2. For doing this, the transmitter 12a splits the (first) signal to be transmitted in a first and second signal portion, wherein the first signal portion is transmitted by modulating the portion to the carrier SC1 of the sub-slot A of slot S1 and by modulating the second signal portion to the carrier SC3 of the sub-slot A of slot S2.

In the same manner, the optional transmitter 12b splits its signal into signal portions, which are transmitted via the sub-slots B (using the carrier SC2 and SC4). As a result the signals carrying the payload of the transmitters 12a, 12b are spread over a large, here the entire bandwidth $BW_s$, using equally spaced sub-carriers; consequently, the used carriers SC1 to SC4 are spaced apart from each other by the reference bandwidth $BW_{ref}/2$. Due to the spreading, the concept allows multiple terminals and to concurrently transmit within at least one $BW_{ref}$ frequency slot.

The usage of different portions within the system bandwidth $BW_s$, each portion belonging to a certain group (cf. group A for the transmitter 12a or group B for the transmitter 12b) has the advantage that statistically, the pointing error does not fully constructively aggregate, since it is unlikely that two different terminals 12a and 12b have the same instantaneous pointing error. This leads to a lower aggregated pointing error and, thus, to an improvement of the power margin to the PSD mask. By reducing the value of the maximum de-pointing pe used in calculating the gain envelope $G_{pe}(d)$, the minimum margin between the de-pointing antenna gain envelope $G_{pe}(d)$ and the PSD mask may be improved. According to embodiments, this allows to increase the individual and aggregated terminal signal power within each bandwidth $BW_{ref}$.

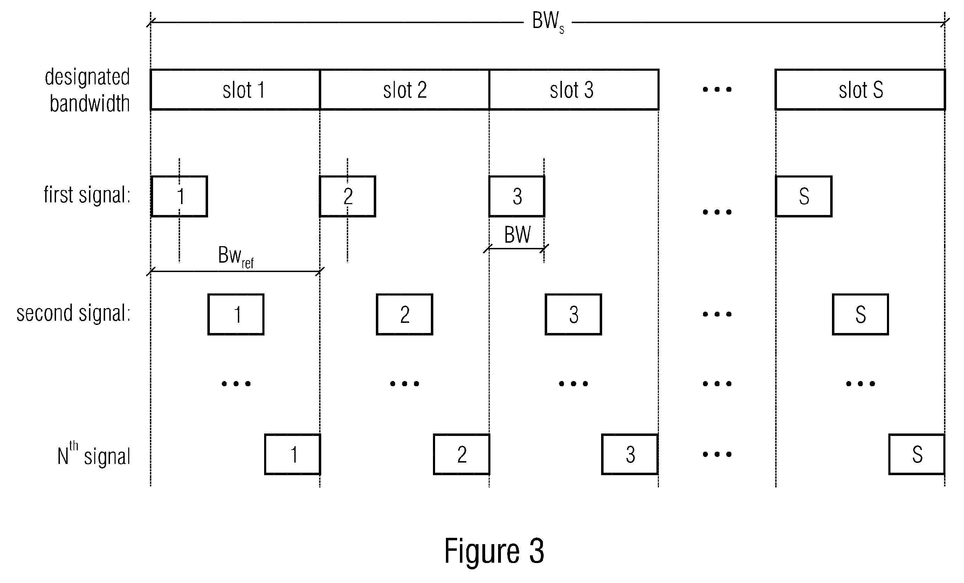

Although in above embodiment the positioning of the respective sub-slots of a group A or B and, thus, the respective subcarriers SC1, SC2, SC3, SC4 has been illustrated in a way that same are arranged within the different frequency slots 1 and 2 always at the same position, it should be noted that according to further embodiment the position within the respective slot may vary. With respect to Figure 3, an enhanced embodiment will be discussed.

As illustrated in Figure 3 the total bandwidth $BW_S$ designated to the system is subdivided into $S$ slots, each having bandwidth $BW_{ref}$. Each slot is further subdivided into $N$ sub-slots, each having bandwidth $BW$. Each carrier signal is also subdivided into $N$ sub-carrier; these sub-carriers are equidistantly spaced in frequency with distance $BW_{ref}$, and with each sub-carrier having the sub-slot bandwidth $BW$. This results in bandwidth $BW_i = S \cdot BW$ available to each carrier signal.

Assuming $N$ sufficiently large and the actual instantaneous pointing error $pe_i$ of each terminal $i$ being independently and randomly distributed, it is highly unlikely that all $pe_i$ aggregate fully constructively. The resulting variance of the aggregated pointing error $pe_S$ is therefore much lower than the variance of each individual pointing error $pe_i$; the maximum pointing error used for calculating the (aggregated) antenna gain envelope therefore is smaller than the maximum pointing error used for calculating the (individual) antenna gain envelope.

Worst case, all $N$ terminals are concurrently transmitting in each $BW_{ref}$ frequency slots. As the aggregated power within each such $BW_{ref}$ frequency slots is limited by the PSD mask, the transmit power of each terminal needs to be reduced to 1/$N$ of the calculated value.

As Example 2, assume $BW_S$ = 800 $kHz$ and $BW_{ref}$ = 4 $kHz$, thus $S$ = 200. Assume the pointing error for each terminal follows a Normal Distribution, $N(\mu, \sigma^2)$, with $\mu = 0$ and $3\sigma = 5°$. Using known properties of the Normal Distribution, the vast majority of the values (99.7%) will be within the interval $\mu - 3\sigma$ to $\mu + 3\sigma$. This is assumed being a reasonable upper bound for the maximum pointing error in this example, thus $pe = 3\sigma = 5°$.

Again using known properties of the Normal Distribution, the sum of $N$ normally distributed variables is also normally distributed, with $\mu' = N \cdot \mu = 0$ and $\sigma'^2 = N \cdot \sigma^2$ or $\sigma' = \sqrt{N} \cdot \sigma$. The variance of the mean of $N$ normally distributed variables scales by 1/N, thus

$$\sigma_S = 1/N \cdot \sigma' = 1/\sqrt{N} \cdot \sigma.$$ Assuming $N$ = 50 sub-slots for up to $N$ terminals concurrently transmitting, $pe_S$ is reduced by $1/\sqrt{50}$ from $pe$ = 5° to $pe_S$ = 0.71°.

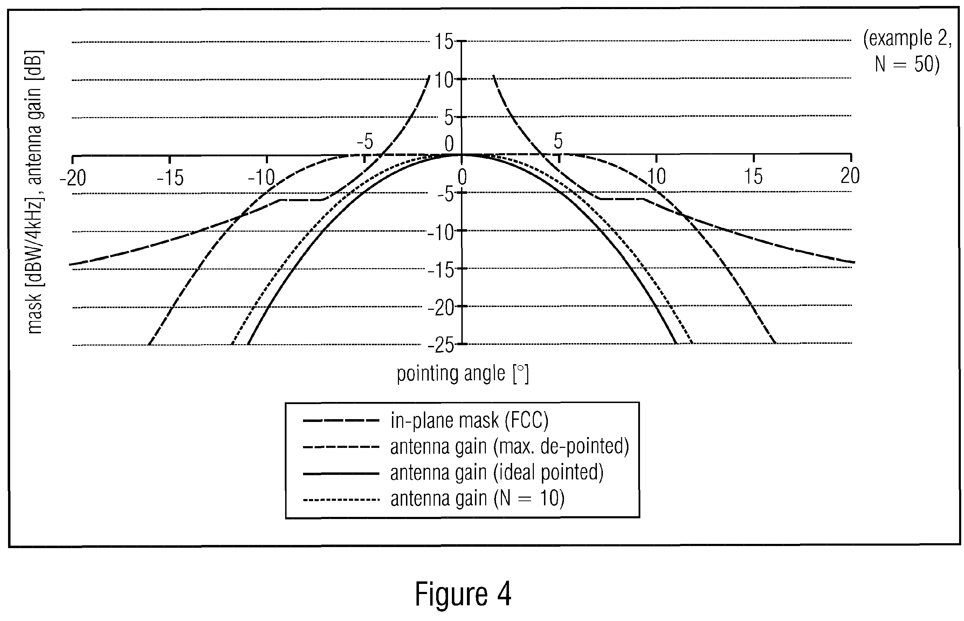

The resulting aggregated antenna gain envelope for $N$ = 50 is illustrated in Figure 4, together with the original antenna gain envelope for a single terminal ($N$ = 1) and the ideal (zero de-pointing) antenna gain.

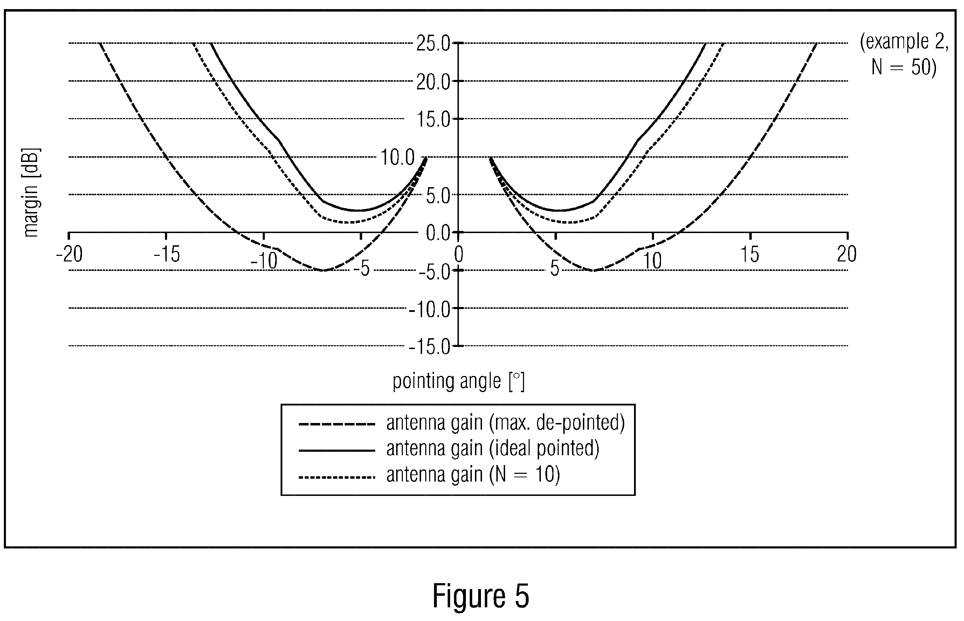

The resulting margin is illustrated in Figure 5, with a minimum of 1.4 dB at $\pm 5.4°$ for N = 50. This yields an improvement of 6.7 dB compared to the minimum of -5.3 dB at $\pm 7°$ for the aggregated antenna gain envelope for a single terminal (N = 1). As $N$ = 50 terminals are assumed to be concurrently transmitting, the maximum power per terminal and $BW_{ref}$ = 4$kHz$ slot needs to be scaled down by 1/$N$. In the example, each terminal's transmit power per $BW_{ref}$ is set to 1.4 $dBW/4kHz$ - 10 · $log_{10}$ 50 = -15.6 $dBW/4kHz$. As each carrier is divided into $S$ sub-carriers, with each sub-carrier in a different $BW_{ref}$ sized slot, total transmit power per terminal may be scaled up by $S$. Using all $S$ = 200 slots, each terminal transmits at -15.6 $d_{BW}$ + 10 · $log_{10}$ 200 = 7.4 $dBW$. Compared to Example 1, this results in a more than 4 times (6.7 $dB$) higher power allowance for each terminal transmitting sub-carriers with the same aggregated bandwidth of 16 kHz.

The above assumes a worst case aggregation of the $N$ concurrent transmissions, resulting in a scaling by 1/$N$. This worst case aggregation requires all $N$ concurrently transmissions having the same instantaneous pointing error, which is increasingly unlikely and pessimistic for larger numbers of $N$.

According to further embodiments, the system may be configured to determine a correction factor. The determiner performs the optional step of determining a correction factor $c(N,p)$ (in dB) as a function of the number $N$ of terminals concurrently transmitting and a target probability $p$ (e.g. $p$ = 99.9%) for the aggregated antenna gain not exceeding 10 · $log_{10}$ $N$ - $c(N, p)$. This correction factor is then used for calculating a biased antenna gain envelope given by $G'_{pe}(d) = G_{pe}(d) - c(N, p)$.

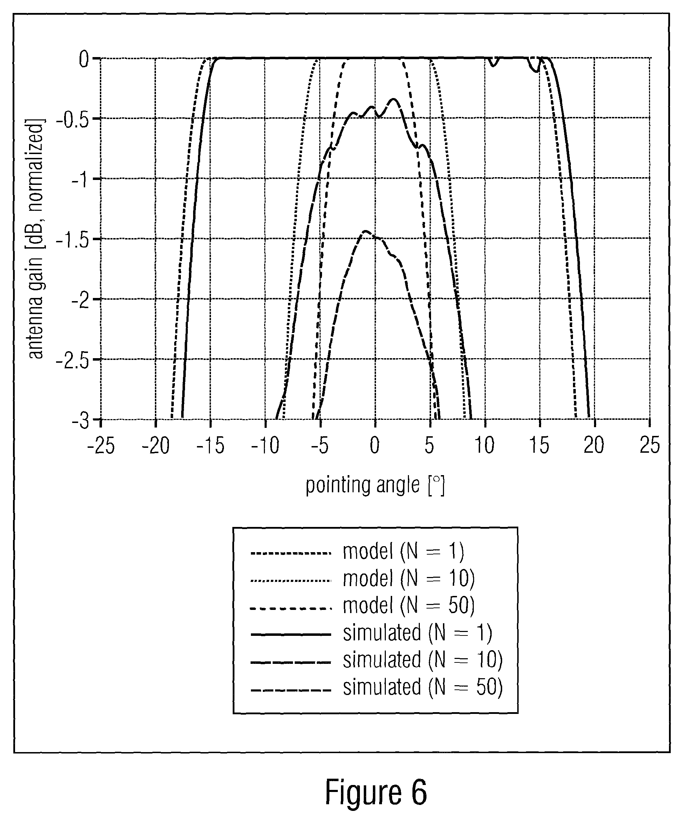

This additional step is illustrated as Example 3, using a Monte-Carlo type simulation to determine the correction factor $c(N,p)$. Figure 6 shows the aggregated antenna gain for different values of $N$ = 1, 10, 50, resulting from an experiment with 500 random trials. The aggregated gain is normalized to 0 dB, by shifting the result by 10 · $log_{10}$ $N$ prior to plotting. For all $N$ the simulation result aligns reasonably well with the shape of the $G_{pe}(d)$ model. However, the maximum gain observed in the experiment is -0.4 dB for N = 10 and -1.5 dB for N = 50. Therefore for N = 50 a correction factor $c$ = 1.5 $dB$ is assumed, increasing the margin (illustrated in Figure 5, minimum of 1.4 $dB$ at $\pm 5.4°$ for $N$ = 50) to 2.9 $dB$ and thus the allowable power density per terminal to -14.1 $dBW/4kHz$.

According to further embodiments, an improvement considers the probability of only $N_i$ of the maximum $N$ terminals actually transmitting as a function of network utilization and determines correction factors $c(N_i,p)$ for each $N_i$.

Assuming the system uses a "scheduler" that coordinates the medium access by granting transmit permissions to a maximum of N terminals and assigning the slot frequency offsets, such a scheduler additionally calculates the applicable correction factor $c(N_i,p)$ for the current $N_i$ and communicates this additional power increase allowance to the $N_i$ active terminals.

As Example 4, assume $N = 50$ and $N_i = 25$. As only 50% of the terminals actually transmit, each of the transmitting terminals may use 3 dB more power. The correction factor $c = 1.5$ *dB* from Example 3 improves to $c = 4.5$ *dB* and thus the allowable power density per terminal improves to - 11.1 *dBW/4kHz*.

Assuming the system uses no such "scheduler" coordinating the medium access, the correction factor $c$ (calculated for N) still can be improved by excluding all $N_i$ and corresponding $c(N_i,p)$ having zero or negligible (i.e. below a predefined threshold) probability and setting $c$ to the worst case value of the remaining $c(N_i,p)$. Such an adjustment is especially beneficial for systems using distributed randomized (e.g. ALOHA-type) medium access control, where the system loading is limited by design to a small fraction of the total system capacity, with large $N_i$ thus being unlikely by design.

According to further embodiments, the above described concept can be beneficially used in systems employing a "scheduler" that coordinates the medium access: If only $N_i$ of the N terminals are actually transmitting ($N_i < N$) the additional possible power increase is communicated to the terminals (as part of scheduling the transmissions by an e.g. central scheduler). Again this further increases the terminal signal power within each $BW_{ref}$ frequency slot, resulting in further increased signal to noise and interference ratio and thus in further increased spectral efficiency and throughput.

According to further embodiments, each of the transmitters may be configured to adapt the per-terminal power based on the loading of the $BW_{ref}$ sub-slots (for system using a scheduler) or may be statically biased (for systems using distributed randomized medium access control). Additionally, it should be noted that the concept can be beneficially be used in systems using distributed randomized (e.g. ALOHA-type) medium access control, excluding large $N_i$ as being unlikely by design of the medium access control scheme and setting $c$ to the worst case value of the remaining $c(N_i,p)$. As $c(N_i,p)$ increases with $N_i$ decreasing, the resulting c allows for an additional power increase in (by design) lightly or moderately loaded systems, resulting in further increased signal to noise and interference ratio and thus in further increased spectral efficiency and throughput.

Although, the embodiments have been discussed with respect to the system 100, it should be noted that further embodiment refers to the transmitter itself. The transmitter may be a uni-directional transmitter, e.g. a transmitter of a machine-to-machine, or internet of things type application, in which typically many terminals are transmitting data towards a receiver like a satellite or to a terrestrial receiver. According to further embodiments, the transmitter may be a bi-directional unit, wherein it should be noted that with respect to the prior art, the above discussed concept is beneficial, since this concept does not require a communication channel towards the terminals, e.g. for communicating the power allowance to the terminal or commanding the interfering terminals to reduce transmit power in order to manage the PSD mask compliance, or adjacent satellite interferences.

A further embodiment refers to a receiver configured to receive a signal from a transmitter, wherein the signal is delivered within at least two signal portions transmitted using two carriers belonging to two different slots (but to the same group of sub-slots).

Although within the above implementations, it has been stated that the sub-carriers are preferably equidistantly spaced from each other, it should be noted that according to further embodiments, the system may be configured to perform the spacing of the sub-carriers dynamically. According to further embodiments, the usage of different sub-carrier bandwidths (dynamically assigned or from a set of predefined widths) are also possible. Alternatively, the use of $BW_{ref}$ that is a (integer) fraction of the reference bandwidth in the applicable PSD mask, e.g. $BW_{ref} = 2kHz$ or $BW_{ref} = 1kHz$ is possible. Instead of equidistantly dividing of the designated bandwidth, a hierarchical frequency partitioning may be used. Here, groups of slots, each group spanning a dedicated fraction of the designated bandwidth BWs and limiting the sub-carrier sequence to the slots belonging to one group may be used.

As illustrated with respect to Figure 3, the number of sub-sots may be larger than two. In this context it should be noted that the number of sub-slots typically limits the number of transmitters of the system.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. Communication system (100) for performing a communication within a designated system bandwidth ($BW_s$), the system comprising:

   at least a first transmitter (12a) for transmitting a first signal using frequencies within the system bandwidth ($BW_s$);
   a receiver (10) for receiving the signals,
   wherein the system bandwidth ($BW_s$) is divided into a plurality of frequency slots (S1, S2), each having a slot bandwidth ($BW_{ref}$), and wherein each of the plurality of frequency slots (S1, S2) is divided into a plurality of sub-slots (A, B), each having a sub-slot bandwidth (BW) and a subcarrier (SC1, SC2, SC3, SC4),
   wherein the first transmitter (12a) is configured to split the first signal into a plurality of signal portions and
   to select for transmitting a first of the plurality of signal portions a first sub-slot of a first of the plurality of frequency slots (S1, S2) and to select for transmitting a second of the plurality of signal portions a first sub-slot of a second of the plurality of frequency slots (S1, S2).

2. Communication system (100) according to claim 1, wherein the communication comprises a second transmitter (12b) for transmitting a second signal using frequencies within the system bandwidth ($BW_s$);
   wherein the transmitter (12b) is configured to split the second signal into a second plurality of signal portions, and
   to select for transmitting a first of the second plurality of signal portions a second sub-slot of the first of the plurality of frequency slots (S1, S2) and to select for transmitting a second of the second plurality of signal portions a second sub-slot of a second of the plurality of frequency slots (S1, S2).

3. Communication system (100) according to claim 1 or 2, wherein the transmitter (12a, 12b) uses for transmitting the plurality of signal portions different subcarriers (SC1, SC2, SC3, SC4) and/or
   the transmitter (12a, 12b) uses for transmitting the plurality of signal portions subcarriers (SC1, SC2, SC3, SC4) of different frequency slots (S1, S2).

4. Communication system (100) according to one of the previous claims, wherein the first transmitter (12a) is configured to select for transmitting a third of a plurality of signal portions a first sub-slot of a third of the plurality of frequency slots.

5. Communication system (100) according to one of the previous claims, wherein all sub-slot bandwidths (BW) of the plurality of sub-slots (A, B) of at least one of the frequency slots (S1, S2) have equal lengths.

6. Communication system (100) according to one of the previous claims, wherein the subcarriers (SC1, SC2, SC3, SC4) within at least one of the plurality of frequency slots (S1, S2) or within all of the plurality of frequency slots (S1, S2) are arranged equidistant.

7. Communication system (100) according to one of the previous claims, wherein the number of frequency slots (S1, S2) and/or the number of sub-slots (A, B) and/or the sub-slot bandwidth (BW) are selected dynamically in accordance with the number of transmitters (12a, 12b) and/or in accordance with the required bandwidth for each transmitter and/or in accordance with the designated system bandwidth ($BW_s$).

8. The communication system (100) according to one of the previous claims, wherein each of the plurality of sub-slots (A, B) within one frequency slot belong to different groups and where each frequency slot comprises sub-slots (A, B) of all groups; or wherein each of the plurality of sub-slots (A, B) within the frequency slots belong to different groups and where each frequency slot comprises a realsubset the sub-slots of all groups, such that the plurality of frequency slots comprise different sub-slots.

9. Communication system (100) according to one of the previous claims, wherein the transmitter uses a total bandwidth which is calculated based on the following formula:

    number of sub-slots (A, B) x sub-slot bandwidth (BW).

10. Communication system (100) according to one of the previous claims, wherein the receiver (10) is a satellite and wherein the at least one transmitter is a mobile or fixed satellite transmitter configured to transmit signals to satellites.

11. Communication system (100) according to one of the previous claims, wherein an emitting behavior for each transmitter is limited with regard to the peak transmit power, the antenna gain and with regard to the pointing performance.

12. Communication system (100) according to claim 11, wherein the transmitter is configured to bias an antenna gain envelope and/or a transmit power in accordance with the limitations.

13. Communication system (100) according to one of the previous claims, wherein the communication system (100) comprises a determiner configured to determine a correction factor for adapting a biasing of the antenna gain envelope of the respective transmitter, wherein the correction factor is a function of the number of transmitters within the system and/or a function of the number of frequency sub-slots (A, B).

14. Communication according to claim 13, wherein the determiner is configured to analyze the current transmitting requirements of all transmitters (12a, 12b) and to adapt the correction factor in accordance with the analysis.

15. A transmitter (12a, 12b) for transmitting signals using frequencies within a designated system bandwidth ($BW_s$) to a receiver (10) for receiving the signals; wherein the system bandwidth ($BW_s$) is divided into a plurality of frequency slots (S1, S2), each having a slot bandwidth ($BW_{ref}$), and wherein each of the plurality of frequency slots (S1, S2) is divided into a plurality of sub-slots (A, B), each having a sub-slot bandwidth (BW) and a subcarrier (SC1, SC2, SC3, SC4), wherein the transmitter (12a, 12b) is configured to split the signal into a plurality of signal portions, and to select for transmitting a first of the plurality of signal portions a first sub-slot of a first of the plurality of frequency slots (S1, S2) and to select for transmitting a second of the plurality of signal portions a first sub-slot of a second of plurality of frequency slots (S1, S2).

16. A receiver (10) for receiving a first signal from a transmitter (12a, 12b), the first signal is transmitted using frequencies within a designated system bandwidth ($BW_s$); wherein the system bandwidth ($BW_s$) is divided into a plurality of frequency slots (S1, S2), each having a slot bandwidth ($BW_{ref}$), and wherein each of the plurality of frequency slots (S1, S2) is divided into a plurality of sub-slots (A, B), each having a sub-slot bandwidth (BW) and a subcarrier (SC1, SC2, SC3, SC4), wherein the receiver (10) to receive a first signal portion transmitted using a first sub-slot of a first of the plurality of frequency slots (S1, S2) and to receive a second signal portion transmitted using a first sub-slot of a second of plurality of frequency slots (S1, S2) and to aggregate the first and second signal portions to obtain the first signal.

**17.** A method for performing communication within a designated system bandwidth ($BW_s$), the method comprising the following steps:

transmitting a signal using frequencies within a system bandwidth ($BW_s$) to a receiver (10) for receiving the signals, wherein the system bandwidth ($BW_s$) is divided into a plurality of frequency slots (S1, S2) each having a slot bandwidth ($BW_{ref}$), and wherein each of the plurality of frequency slots (S1, S2) is divided into a plurality of sub-slots (A, B), each having a sub-slot bandwidth (BW) and a subcarrier (SC1, SC2, SC3, SC4);

splitting the signal into a plurality of signal portions; and

selecting for transmitting a first of the plurality of signal portions a first sub-slot of a first of the plurality of frequency slots (S1, S2); and

selecting for transmitting a second of the plurality of signal portions a first sub-slot of a second of the plurality of frequency slots (S1, S2).

Figure 1

Figure 2

Figure 3

EP 3 282 598 A1

Figure 4

Figure 5

Figure 6

Figure 7

Figure 8

EP 3 282 598 A1

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IAN F. AKYILDIZ ET AL: "LTE-Advanced and the evolution to Beyond 4G (B4G) systems", PHYSICAL COMMUNICATION, vol. 10, 1 March 2014 (2014-03-01), pages 31-60, XP055341250, AMSTERDAM, NL ISSN: 1874-4907, DOI: 10.1016/j.phycom.2013.11.009 * Section 2-introduction part * * Section 2.3.3 to Section 2.3.5 * * figures 7, 8 * | 1-10, 15-17 | INV. H04B7/185 H04W72/04 |
| X | US 2015/249462 A1 (CHANG DONALD C D [US]) 3 September 2015 (2015-09-03) * paragraph [0007] * | 1,3,4, 10,15-17 | |
| X | US 9 209 891 B1 (MANDELL MICHAEL [US] ET AL) 8 December 2015 (2015-12-08) * figures 1, 7-10 * * abstract * * column 15, line 28 - line 67 * * column 16, line 3 - line 25 * * column 16, line 65 - line 68 * * column 17, line 1 - line 10 * * column 17, line 23 - line 26 * * column 19, line 9 - line 66 * | 1,3-7,9, 10,15,17 | |
| X Y A | US 2007/248173 A1 (HASSAN AMER A [US] ET AL) 25 October 2007 (2007-10-25) * figures 1, 2 * * abstract * * paragraph [0005] - paragraph [0006] * * paragraph [0010] * * paragraph [0022] - paragraph [0024] * * paragraph [0030] * * paragraph [0037] * * paragraph [0050] * | 1 11,12 13,14 | |

TECHNICAL FIELDS SEARCHED (IPC)

H04B
H04W

-/--

The present search report has been drawn up for all claims

| Place of search | Date of completion of the search | Examiner |
|---|---|---|
| The Hague | 1 June 2017 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 02/19562 A2 (INTEL CORP [US]; JACOBSEN ERIC [US]) 7 March 2002 (2002-03-07)<br>* abstract *<br>* page 3, line 1 - line 3 *<br>* page 5, line 25 - line 30 *<br>----- | 11,12 | |
| A | EP 1 879 298 A1 (ST MICROELECTRONICS NV [NL]) 16 January 2008 (2008-01-16)<br>* paragraph [0011] *<br>* paragraph [0021] *<br>* paragraph [0023] *<br>* paragraph [0076] - paragraph [0080] *<br>----- | 11-14 | |

TECHNICAL FIELDS
SEARCHED      (IPC)

The present search report has been drawn up for all claims

| Place of search | Date of completion of the search | Examiner |
|---|---|---|
| The Hague | 1 June 2017 | Arroyo Valles, |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

Europäisches
Patentamt

European
Patent Office

Office européen
des brevets

Application Number

EP 16 18 4034

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 16 18 4034

The Search Division considers that the present European patent application does not comply with the requirements of unity of invention and relates to several inventions or groups of inventions, namely:

```
    1. claims: 1-10, 15-17

        Allowing multiple users to transmit concurrently and
        independently within the frequency slots
                            ---

    2. claims: 11-14

        Sizing the antenna gain or the power of the transmitter
                            ---
```

## ANNEX TO THE EUROPEAN SEARCH REPORT
## ON EUROPEAN PATENT APPLICATION NO.

EP 16 18 4034

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2017

| Patent document cited in search report | | Publication date | Patent family member(s) | | Publication date |
|---|---|---|---|---|---|
| US 2015249462 | A1 | 03-09-2015 | US | 2015249462 A1 | 03-09-2015 |
| | | | US | 2017063389 A1 | 02-03-2017 |
| US 9209891 | B1 | 08-12-2015 | US | 9209891 B1 | 08-12-2015 |
| | | | US | 9397741 B1 | 19-07-2016 |
| US 2007248173 | A1 | 25-10-2007 | AU | 2007243348 A1 | 08-11-2007 |
| | | | BR | PI0710700 A2 | 23-08-2011 |
| | | | CA | 2646967 A1 | 08-11-2007 |
| | | | CN | 101433046 A | 13-05-2009 |
| | | | EP | 2011296 A2 | 07-01-2009 |
| | | | IL | 194289 A | 30-08-2012 |
| | | | JP | 5053365 B2 | 17-10-2012 |
| | | | JP | 2009535910 A | 01-10-2009 |
| | | | KR | 20090006833 A | 15-01-2009 |
| | | | RU | 2008142379 A | 27-04-2010 |
| | | | TW | 200812279 A | 01-03-2008 |
| | | | US | 2007248173 A1 | 25-10-2007 |
| | | | WO | 2007127250 A2 | 08-11-2007 |
| | | | ZA | 200808239 B | 30-12-2009 |
| WO 0219562 | A2 | 07-03-2002 | AU | 8687801 A | 13-03-2002 |
| | | | CN | 1442001 A | 10-09-2003 |
| | | | DE | 10196568 B4 | 04-11-2010 |
| | | | DE | 10196568 T1 | 07-08-2003 |
| | | | GB | 2381708 A | 07-05-2003 |
| | | | TW | I248729 B | 01-02-2006 |
| | | | US | 7245880 B1 | 17-07-2007 |
| | | | WO | 0219562 A2 | 07-03-2002 |
| EP 1879298 | A1 | 16-01-2008 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002058477 A
- US 8885693 B
- US 2010124922 A
- US 2002146982 A
- US 2002146995 A
- US 2002151278 A
- US 2011269396 A
- US 7962134 B
- US 2009052373 A
- US 2004037238 A
- US 6052364 A
- US 2012156986 A
- US 2002050953 A
- US 5398035 A
- US 2011304496 A